# EUROPEAN PATENT APPLICATION

(11) **EP 3 360 680 A2**
(43) Date of publication of application: **15.08.2018**
(21) Application number: 18705068.7
(22) Date of filing: 19.02.2018
(51) Int. Cl.: B32B 7/02, C09J 7/20, B32B 9/04, F16L 59/065

(54) **LAMINATED MATERIAL FOR VACUUM INSULATION PANEL COVER MATERIAL, AND VACUUM INSULATION PANEL COVER MATERIAL COMPRISING SAME**

(30) Priority: 28.02.2017 KR 20170026674; 24.11.2017 KR 20170158907
(71) Applicant: Cj Cheiljedang Corporation, Seoul 04560 (KR)
(72) Inventor: KIM, Young Joon, Yongin-si, Gyeonggi-do 16817 (KR); CHOI, Hong Yeol, Gangdong-gu, Seoul 05215 (KR); MOON, Sang Gwon, Mapo-gu, Seoul 04098 (KR)
(74) Representative: Dehns
(86) International application number: PCT/KR2018/002017
(87) International publication number: WO 2018/117777

(57) **Abstract**

The present invention relates to a multilayer material for a covering material of a vacuum insulating panel and a covering material of a vacuum insulating panel having the same.

## Description

### [Technical Field]

The present invention relates to a multilayer material for a covering material of a vacuum insulating panel and a covering material of a vacuum insulating panel having the same.

### [Background Art]

A vacuum insulating panel includes a covering material with a low gas or moisture penetration ratio, a core material with excellent insulation effect disposed inside the covering material of a vacuum state, and a getter material, to provide an excellent heat insulation effect. So, the vacuum insulating panel is an advanced material which is recently in increasing demand because having heat insulation performance, which is several times that of the existing insulation materials, such as polyurethane or Styrofoam.

In general, a covering material for the vacuum insulating panel is formed to contain a metal ingredient, such that it can maintain a vacuum state inside the covering material to maximize gas barrier property, moisture barrier property, and a thermal insulation performance of the core material.

In the meantime, thermal efficiency of the vacuum insulating panel depends on performance of the core material, but is also influenced by thermal conductivity of the covering material, which surrounds the core material. Therefore, in the case of the covering material of the vacuum insulating panel having the metal ingredient, a heat transfer phenomenon caused by thermal conductivity of the metal ingredient may occur. In order to minimize the heat transfer phenomenon, the covering material of the vacuum insulating panel has been changed from the form of containing a metal thin film into the form of vacuum-metalizing metal on a substrate layer. In detail, Korean Patent Publication No. 10-2013-0021528 discloses a covering material of a vacuum insulator, which is in current use. In order to prevent gas penetration, a plastic film that a metal foil, such as an opaque aluminum foil, or a metal-like or diamond-like carbon material is deposited on the surface is used as a barrier layer, but there still exists the heat transfer phenomenon through the vacuum metallization. So, attempts to minimize the metal layer are in progress.

### PATENT LITERATURE

### Patent Documents

Patent Document 1: Korean Patent Publication No. 10-2013-0021528 A1 published on March 06, 2013
Patent Document 2: Korean Patent Publication No. 10-2012-0017148 A1 published on February 28, 2012

### [Disclosure]

### [Technical Problem]

Accordingly, the present invention has been made in an effort to solve the above-mentioned problems occurring in the prior arts, and it is an object of the present invention to provide a multilayer material for a covering material of a vacuum insulating panel comprising: one or more nonmetal barrier layers having a substrate layer, on which a thin film layer is formed, and, which contains at least one of polyester, polyolefin and polyamide; and a thermal bonding layer disposed on the lower end of the nonmetal barrier layer.

Another object of the present invention is to provide a covering material of a vacuum insulating panel having the multilayer material.

### [Technical Solution]

To achieve the above objects, the present invention provides a multilayer material for a covering material of a vacuum insulating panel comprising: one or more nonmetal barrier layers having a substrate layer, on which a thin film layer is formed, and, which contains at least one of polyester, polyolefin and polyamide; and a thermal bonding layer disposed on the lower end of the nonmetal barrier layer.

The multilayer material for the covering material of the vacuum insulating panel does not include a metal layer. The term of "metal layer" is an opaque metal layer having a thin film or a vacuum-metalized aluminum (VM-PET) on a film or a substrate.

The thin film layer is made with a moisture-repellent and gas-repellent material having at least one of organic materials and inorganic materials, and is formed on the upper surface of the substrate layer. In detail, the organic material is at least one selected from groups consisting of ethylene vinyl alcohol, polyvinyl alcohol, and nano-clay, and the inorganic material is at least one selected from groups consisting of silicon oxide and aluminum oxide. The organic materials of a plate-type or a needle-type are dispersed to be coated or hardened on the substrate layer, such that the thin film layer is formed. The inorganic material is deposited on the substrate layer through vacuum metallization. The organic materials and the inorganic materials may have barrier properties, and lots of the organic materials and lots of the inorganic materials may be formed on the substrate layer through complex coating.

Moreover, the thin film layer further includes natural substances.

The thin film layer has a sufficient thickness to have moisture and gas barrier properties, and specifically, within a range of 0.1 *µ*m to 1 *µ*m, more specifically, 0.3 *µ*m to 0.9 *µ*m, the most specifically, 0.3 *µ*m to 0.6 *µ*m. If the thin film layer is thinner than 0.1 *µ*m, it is difficult to show moisture and gas barrier properties, and if the thin film layer is thicker than 1 *µ*m, the multilayer material is deteriorated in processability.

The nonmetal barrier layer may be a substrate layer having at least one of polyester, polyolefin, polyamide, and glass fiber. In detail, the substrate layer may be a polyester, polyolefin or polyamide film or sheet, or a polyester or glass fiber nonwoven-fabric, or at least one of the film, the sheet and the nonwoven-fabric. The substrate layer may have a thickness of 5 *µ*m to 30 *µ*m. If the substrate layer is less than 5 *µ*m in thickness, the covering material of the vacuum insulating panel may be easily damaged by an external shock or scratch, and if the substrate layer is more than 30 *µ*m in thickness, manufacturing costs increases and processability is deteriorated.

At least one nonmetal barrier layer is formed on the multilayer material of the vacuum insulating panel to have moisture and gas barrier properties. In detail, two or more, specifically, three or more nonmetal barrier layers may be formed. In the most specifically, the nonmetal barrier layer is formed to have a first nonmetal barrier layer, a second nonmetal barrier layer, and a third nonmetal barrier layer.

In the meantime, the first to third nonmetal barrier layers respectively include thin film layers. The thin film layers of the first to third nonmetal barrier layers respectively have organic materials or inorganic materials. The thin film layers of the first to third nonmetal barrier layers respectively include the organic layers of at least one layer and the inorganic layers of at least one layer, such that the thin film layers of the first to third nonmetal barrier layers include all of the organic materials and the inorganic materials. For example, the thin film layers of the first nonmetal barrier layer and the second nonmetal barrier layer respectively comprise organic materials, and the thin film layer of the third nonmetal barrier layer comprises the inorganic material. Because the thin film layers of the first to third nonmetal barrier layers include the organic materials and the inorganic materials, the thin film layers can minimize deterioration in various temperature and humidity conditions by making up for the weakness of each material.

The thermal bonding layer is formed at the lower end of the nonmetal barrier layer, and is a layer thermally bonded with a thermal bonding layer of the multilayer material for the covering material of another vacuum insulating panel when vacuum insulators are manufactured. The thermal bonding layer includes at least one of polyolefin-based resin, ethylene-vinyl acetate (EVA) copolymer resin, and methacrylic acid methylethylene copolymer resin.

The thermal bonding layer may have a thickness of 20 *µ*m to 60 *µ*m, specifically, 30 *µ*m to 50 *µ*m. If the thermal bonding layer is less than 20 *µ*m, bonding force is weak such that thermal bonding is not achieved, and if the thermal bonding layer is more than 60 *µ*m, lots of external gas and vapor flow in through a sealing layer, such that durability of the vacuum insulating panel becomes weak.

Each layer of the multilayer material for the covering material of the vacuum insulating panel may be bonded by an adhesive layer. The adhesive layer may be a polyurethane-based adhesive, and the adhesive layer is coated in 2 to 8 g/m², specifically, 3 to 4 g/m².

The multilayer material for the covering material of the vacuum insulating panel may be manufactured through the steps of: manufacturing one or more barrier layers; coating them with an adhesive; laminating them; and bonding the thermal bonding layer on the bottom surface of the barrier layer with the adhesive.

In the multilayer material for the covering material of the vacuum insulator, one or more barrier layers are laminated by being coated with the adhesive, and the thermal bonding layers are also laminated with the adhesive. In consideration of gas and moisture barrier properties of each barrier layer, lamination sequence is determined, and if possible, thin films with barrier performance are coated or vacuum-metallized layers are faced to each other and bonded together.

The multilayer material for the covering material of the vacuum insulating panel may have a reduced change in thermal conductivity. The change in thermal conductivity may be reduced to above 1.5 mW/mK or 1.8 mW/mK and/or below 2.0 mW/mK, 2.5 mW/mK, or 3.0 mW/mK in comparison with the initial thermal conductivity of the covering material of the vacuum insulator. The measurement of the thermal conductivity may be thermal conductivities measured after being stored under acceleration test conditions (temperature at 80°C and 65%RH) for one, two, three, four, five or six weeks.

The multilayer material for the covering material of the vacuum insulating panel may have a reduced thermal bridge at an edge portion. Reduction of the thermal bridge at the edge portion means reduction of K_{thermal bridge}, and may be less than 10%, 7% or 6%, specifically, 0.1% to 10%, 0.5% to 7%, 0.5% to 6%, or 1% to 6%, than that of the multilayer material for the covering material of the vacuum insulator including aluminum foil applied as the barrier layer, but the present invention is not limited to the above. The aluminum foil applied as the barrier layer may be 6 *µ*m to 9 *µ*m. In comparison of K_{thermal bridge} with the multilayer material for the covering material of the vacuum insulating panel having the vacuum-metalized layer on the upper surface of the substrate layer, the reduction of the thermal bridge at the edge portion may be less than 70%, 60% or 55%, and specifically, 1% to 70%, 1% to 60%, 10% to 60%, 30% to 60%, or 40% to 55%, but the present invention is not limited to the above. The substrate layer may be a polyester film, and the vacuum-metalized layer may be a vacuum-metalized layer of 0.1 *µ*m to 0.3 *µ*m.

Furthermore, the present invention provides a covering material of a vacuum insulating panel using the multilayer material for the covering material of the vacuum insulator.

The covering material of the vacuum insulating panel may further include a protective layer on the multilayer material. The protective layer serves to protect the covering material from an external shock and scratch, and may be one selected from polyethylene terephthalate (PET) resin, nylon resin, and polypropylene (OPP).

Additionally, the present invention provides a vacuum insulating panel using the covering material of the vacuum insulator.

The vacuum insulating panel includes a core material and a getter material, is sealed by the covering material through a known method, and includes one or more core material and absorbent material selected from glass fiber, glass wool, polyurethane, polypropylene, and polyester.

### [Advantageous Effects]

As described above, the multilayer material for the covering material of the vacuum insulator, which does not have the metal layer, is transparent and has the same gas and moisture barrier properties as the conventional multilayer material for the covering material of the vacuum insulating panel having the metal layer, has a small difference in thermal conductivity before and after a thermal shock, and provides the same performance even though not having additional barrier layer for maintain the vacuum level, which is mainly an aluminum foil and is manually inserted between the thermal boding layer of the covering material and the core material during the manufacturing process, thereby providing the same performance.

In addition, the present invention provides the covering material of the vacuum insulating panel having the multilayer material.

### [Description of Drawings]

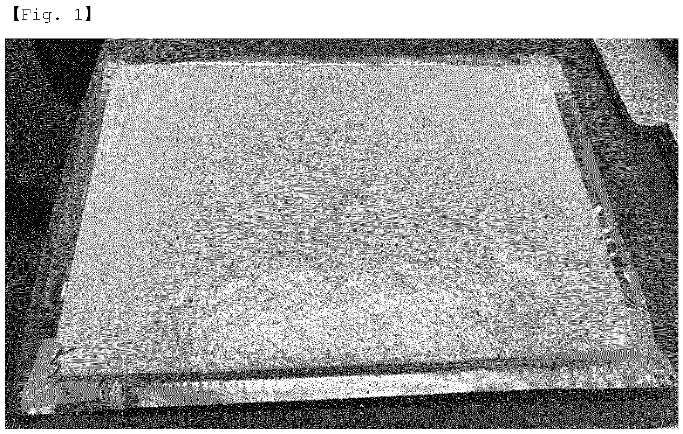

FIG. 1 is a photograph showing a covering material according to an embodiment of the present invention.

### [Mode for Invention]

Hereinafter, reference will be now made in detail to the preferred embodiment of the present invention with reference to the attached drawings. However, this is provided only to exemplarily describe the present invention and the scope of the present invention is not limited to such an embodiment.

### [Embodiment]

### Manufacturing Example 1: Manufacturing of multilayer material for covering material of vacuum insulator

### (1) Manufacturing of nonmetal barrier layer

A first nonmetal barrier layer was manufactured through the steps of arranging plate-type nano-clays (bentonite, exfoliated graphite, vermiculite, and so on) inside organic materials and forming a thin film of about 0.5 *µ*m or less than 0.5 *µ*m on the surface of a substrate made of polyester, polyolefin, polyamide, or the like.

Moreover, a second nonmetal barrier layer was manufactured through the steps of arranging plate-type or needle-type olefin-based nano-clays (bentonite, exfoliated graphite, vermiculite, and so on) and forming a thin film of about 0.5 *µ*m or less than 0.5 *µ*m on the surface of a substrate made of polyester, polyolefin, polyamide, or the like.

Moreover, a third nonmetal barrier layer was manufactured through the steps of arranging inorganic materials (aluminum oxide or metal oxide) and forming a thin film of about 0.5 *µ*m or less than 0.5 *µ*m on the surface of a substrate made of polyester, polyolefin, polyamide, or the like.

The first to third nonmetal barrier layers had oxygen penetration rate of less than 0.5cc/m²/day (23°C 0%RH) and moisture penetration rate of less than 0.5g/m²/day (37.8°C 100%RH), and the nonmetal barrier layers were manufactured by applying a polyurethane-based adhesive among the first to third barrier layers with spread volume of 3 to 4g/m² and stacking the first to third barrier layers in order.

### (2) Formation of thermal bonding layer

A thermal bonding layer was formed by adhering a film made of at least one of polyolefin-based resin, ethylene-vinyl acetate (EVA) copolymer resin, and methacrylic acid methylethylene copolymer resin on the bottom surface of the third nonmetal barrier layer using a polyurethane-based adhesive with spread volume of 3 to 4g/m².

### Manufacturing Example 2: Manufacturing of multilayer material for covering material of vacuum insulator

A first nonmetal barrier layer was manufactured through the steps of arranging inorganic materials (aluminum oxide or silicon oxide) and forming a thin film of about 0.5 *µ*m or less than 0.5 *µ*m on the surface of a substrate made of polyester, polyolefin, polyamide, or the like through vacuum metallization.

A second nonmetal barrier layer was manufactured through the steps of dispersing nano-clays (bentonite, exfoliated graphite, vermiculite, and so on), polyvinyl alcohol or ethylene vinyl alcohol inside organic materials and forming a thin film of about 0.5 *µ*m or less than 0.5 *µ*m on the surface of a substrate made of polyester, polyolefin, polyamide, or the like.

A third nonmetal barrier layer was manufactured through the steps of arranging inorganic materials (aluminum oxide or silicon oxide) and forming a thin film of about 0.5 *µ*m or less than 0.5 *µ*m on the surface of a substrate made of polyester, polyolefin, polyamide, or the like through vacuum metallization. Except the above, the multilayer material for the covering material of the vacuum insulating panel was manufactured in the same way as the manufacturing example 1.

### Manufacturing Example 3: Manufacturing of multilayer material for covering material of vacuum insulator

A first nonmetal barrier layer was manufactured through the steps of dispersing nano-clays (bentonite, exfoliated graphite, vermiculite, and so on), polyvinyl alcohol or ethylene vinyl alcohol inside organic materials and forming a thin film of about 0.5 *µ*m or less than 0.5 *µ*m on the surface of a substrate made of polyester, polyolefin, polyamide, or the like.

A second nonmetal barrier layer was manufactured through the steps of dispersing nano-clays (bentonite, exfoliated graphite, vermiculite, and so on), polyvinyl alcohol or ethylene vinyl alcohol inside organic materials and forming a thin film of about 0.5 *µ*m or less than 0.5 *µ*m on the surface of a substrate made of polyester, polyolefin, polyamide, or the like.

A third nonmetal barrier layer was manufactured through the steps of arranging inorganic materials (aluminum oxide or silicon oxide) and forming a thin film of about 0.5 *µ*m or less than 0.5 *µ*m on the surface of a substrate made of polyester, polyolefin, polyamide, or the like through vacuum metallization. Except the above, the multilayer material for the covering material of the vacuum insulating panel was manufactured in the same way as the manufacturing example 1.

### Manufacturing Examples 4 to 6: Manufacturing of multilayer material for covering material of vacuum insulator

Covering materials of vacuum insulators according to manufacturing examples 4 to 6 were manufactured by forming protective layers of polyethylene terephthalate (PET) resin on the first nonmetal barrier layers of the multilayer materials for the covering materials of the vacuum insulators manufactured through the manufacturing examples 1 to 3.

### Comparison Examples 1 and 2: Manufacturing of covering material of vacuum insulating panel having metal layer

As comparison examples, a covering material (comparison example 1) having an aluminum foil and a covering material (comparison example 2) having three vacuum-metalized layers.

In detail, the covering material of the vacuum insulating panel according to the comparison example 1 was manufactured to use an aluminum foil (7 *µ*m) as the barrier layer and have two protective layers having a polyamide or polyester film on the surface thereof, and one thermal bonding layer was formed below the barrier layer.

The covering material of the vacuum insulating panel according to the comparison example 2 was manufactured such that each vacuum-metalized layer having a polyester film as a substrate had thickness of about 0.1 *µ*m and the vacuum-metalized layer of the third layer was manufactured to have thickness of about 0.3 *µ*m. The vacuum-metalized layer served as a barrier layer and a protective layer, and one thermal bonding layer was formed on the bottom surface of the three vacuum-metalized layers. Furthermore, a coating layer was formed on the upper surface in order to form an additional barrier.

### Experiment Example 1: Measurement of oxygen penetration level

The covering materials according to the manufacturing examples 4 to 6 having the multilayer material according to the manufacturing example 1 were under the conditions that temperature was 23°C and relative humidity was 0%RH and oxygen penetration level was measured.

As a result of the measurement, oxygen penetration level was less than 0.01cc/m²/day, and it was checked that the oxygen penetration level was the same as the conventional covering material having the metal layer.

### Experiment Example 2: Measurement of moisture penetration level

Moisture penetration levels of the covering materials according to the manufacturing examples 4 to 6 were measured using 3/33 equipment of MOCON Company based on ASTM F-1249.

As a result of the measurement, moisture penetration level of the covering material according to the manufacturing example 4 having the multilayer material of the manufacturing example 1 was less than 0.01g/m²/day, moisture penetration level of the covering material according to the manufacturing example 5 having the multilayer material of the manufacturing example 2 was less than 0.01g/m²/day, and moisture penetration level of the covering material according to the manufacturing example 6 having the multilayer material of the manufacturing example 3 was less than 0.01g/m²/day. Therefore, it was checked that the oxygen penetration level was the same as the conventional covering material having the metal layer.

### Experiment Example 3: Evaluation of thermal conductivity and thermal shock

Vacuum insulators were manufactured using the covering materials according to the manufacturing examples 4 to 6, and then, the initial thermal conductivity of each of the vacuum insulators was evaluated. After that, the vacuum insulators were stored under the acceleration test conditions (at temperature of 80°C and 65%RH), and then, thermal conductivity was measured. It was checked that a change in thermal conductivity before and after the acceleration test was less than 2.0mW/mK. The covering materials according to the present invention has the same performance as the conventional covering material of the vacuum insulating panelhaving the metal layer.

### Experiment Example 4: Evaluation of thermal bridge at edge portion

As a result of comparison of thermal conductivity (K_{thermal bridge}) by the covering materials of the comparison examples 1 and 2 and the manufacturing example 4, thermal conductivity (K_{thermal bridge}) of the manufacturing example 4 was 5% less than that of the aluminum foil of the comparison example 1, and was 50% less than that of the vacuum-metalized layers of the comparison example 2.

## Claims

1. A multilayer material for a covering material of a vacuum insulating panel comprising:
one or more nonmetal barrier layers having a substrate layer, on which a thin film layer is formed, and, which comprises at least one of polyester, polyolefin and polyamide; and
a thermal bonding layer disposed on the lower end of the nonmetal barrier layer.

2. The multilayer material according to claim 1, wherein the thin film layer is made with a moisture-repellent and gas-repellent material having at least one of organic materials and inorganic materials, and is formed on the upper surface of the substrate layer,
wherein the organic material is at least one selected from groups consisting of ethylene vinyl alcohol, polyvinyl alcohol, and nano-clay, and
wherein the inorganic material is at least one selected from groups consisting of silicon oxide and aluminum oxide.

3. The multilayer material according to claim 1, wherein the thin film layer has thickness of 0.1 *µ*m to 1 *µ*m.

4. The multilayer material according to claim 1, wherein the nonmetal barrier layer comprises a first nonmetal barrier layer, a second nonmetal barrier layer, and a third nonmetal barrier layer.

5. The multilayer material according to claim 4, wherein the thin film layers of the first nonmetal barrier layer and the second nonmetal barrier layer comprise an organic material, and
wherein the thin film layer of the third nonmetal barrier layer comprises an inorganic material.

6. The multilayer material according to claim 1, wherein the thermal bonding layer is at least one selected from polyolefin-based resin, ethylene-vinyl acetate (EVA) copolymer resin, and methacrylic acid methylethylene copolymer resin.

7. A covering material of a vacuum insulating panel using the multilayer material according to any one of claims 1 to 6.
